# EUROPEAN PATENT APPLICATION

(11) **EP 3 121 222 A1**
(43) Date of publication of application: **25.01.2017**
(21) Application number: 15306204.7
(22) Date of filing: 24.07.2015
(51) Int. Cl.: C08K 5/101, C08K 5/132, C08K 5/134, C08L 1/12, C08L 1/14, C08K 5/00

(54) **PLASTICIZED CELLULOSE ESTER DERIVATES, A PROCESS FOR ITS PRODUCTION AND ITS USES**

(71) Applicant: Rhodia Operations, 75009 Paris (FR)
(72) Inventor: The designation of the inventor has not yet been filed
(74) Representative: Benvenuti, Federica

(57) **Abstract**

The present invention concerns a plasticized cellulose ester derivative composition comprising a cellulose ester derivative and at least a compound of formula (I) 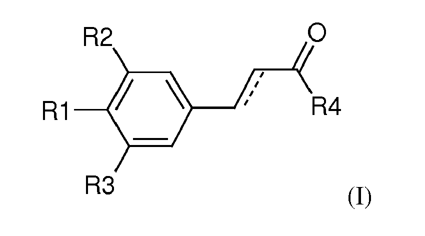 wherein
R1 represents a hydrogen atom or a hydroxyl group,
R2 and R3 independently represent a hydrogen atom, a (C₁-C₄)alkyl group or a-O(C₁-C₄)alkyl group,
R4 represents a hydrogen atom, an hydroxyl group, a (C₁-C₄)alkyl group, a benzyl group, a -O(C₁-C₄)alkyl group or a -Obenzyl group, and
represents a single bond or a double bond.

The present invention further relates to the use of a compound of formula (I) as a plasticizer of a cellulose ester derivative and a process for the manufacture of a plasticized article.

## Description

The present invention concerns plasticized compositions comprising cellulose ester derivates and more particularly cellulose acetate, a process for its production and its uses.

Cellulose acetate itself has no thermoplasticity. The use of an appropriate plasticizer in the thermal molding soften the polymer and gives rise to a temperature suitable for processing. Further, the addition of a plasticizer can improve the flexibility of a molded article. A list of typical plasticizers compatible with cellulose acetate is as follows: phthalates derivatives such as dibutylphthalate (DBP), diethylphthalate (DEP), dimethyl phthalate (DMP), di-2-methoxyethyl phthalate, ethyl phthalyl ethyl glycolate (EPEG) and methyl phthalyl glycolate (MPEG); citrate derivatives such as triethyl citrate and acetyl triethylcitrate; polyols, polyesters or oligoesters such as dibutyl tartrate, ethyl O-benzoylbenzoate, triacetin, triproprionin; phosphate derivatives such as triethyl phosphate (TEP) and triphenyl phosphate (TPP) and other derivatives such as o-cresyl p-toluensulfonate and N-ethyltoluenesulfonamide.

By way of example of other plasticizers GB 718,765 discloses cellulose acetate compositions plasticized with a monophenyl ether of polyethylene glycol containing from 4 to 6 oxyethylene groups.

US 2,811,460 and US 2,811,461 respectively disclose m-methoxyphenyl p-hydroxybenzoate and resorcinol mono-m-hydroxybenzoate as additives dedicated to inhibit breakdown of cellulose organic acid ester plastics by exposure to ultraviolet light.

Furthermore, US 1,930,135 describes compositions of matter in which cellulose organic esters, such as cellulose acetate are combined or mixed with compatible plasticizers which are lower alkyl esters of a substituted benzoic acid, which is selected from the group consisting of butyl o-methoxy benzoate, ethyl p-methoxy benzoate and propyl p-hydroxy benzoate.

However, most of the plasticizers in the art have a fossil origin. Some of them have to answer to toxico -eco toxicological regulation issues (family of phthalates for example), and very few are potentially bio-based such as triacetin and triethyl citrate.

Thus, there is a need to propose a new family aiming at extending the panel of potentially bio-based plasticizers of cellulose derivatives.

More particularly, there is a need to provide plasticizers of cellulose derivatives derived from renewable, i.e. biosourced, matter.

There is also a continuing need to provide the skilled person with new plasticizers that can provide an efficient plasticizing performance, in particular comparable or even better plasticizing performances than reference plasticizers such as triacetin.

There is also a need to dispose new plasticizers that permit a limited exudation in time and temperature, in particular when compared to reference compositions comprising triacetin as plasticizer.

The present invention has for purpose to meet these needs.

Therefore, the present invention concerns a plasticized cellulose ester derivative composition comprising a cellulose ester derivative and at least a compound of formula (I) 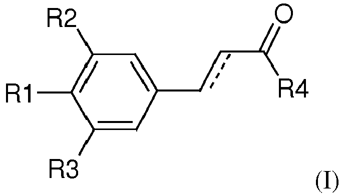 wherein
R1 represents a hydrogen atom or a hydroxyl group,
R2 and R3 independently represent a hydrogen atom, a (C₁-C₄)alkyl group or a -O(C₁-C₄)alkyl group,
R4 represents a hydrogen atom, an hydroxyl group, a (C₁-C₄)alkyl group, a benzyl group, a -O(C₁-C₄)alkyl group or a -Obenzyl group, and
---- represents a single bond or a double bond.

In another particular embodiment, the present invention concerns the use of a compound of formula (I) as defined above as plasticizer of a cellulose ester derivative, and more particularly of cellulose ester, and even more particularly of cellulose acetate.

In another particular embodiment, the present invention concerns a process for the manufacture of a plasticized article comprising the steps of:
(a) having a composition according to the present invention, and
(b) forming the composition to produce the article, for example by means of extrusion and injection molding.

In a further particular embodiment, the present invention relates to the use of a composition according to the present invention for producing a plasticized article, for example a plasticized article selected from a cosmetic packaging, food packaging, hair accessories, wiring devices, electronic devices, home appliances, eye glass frame and tool handle.

In the context of the present invention, the expression:
- "a (C₁-C₄)alkyl group" as used herein refers to a linear or branched, saturated or unsaturated alkyl group having from 1 to 4 carbon atoms. Examples are, but are not limited to a methyl group, an ethyl group, a propyl group, a secondary butyl group, a n-butyl group, a tertio-butyl group,
- "exudation" means that a product is released from a matrix of origin.
More particularly in the framework of the present invention, exudation may be stated when the plasticizer releases from the cellulose derivative matrix over a period of time over 20 hours, more than a reference composition plasticized with triacetin in similar amounts. The measure of the amount of plasticizer that can exudate from the cellulose derivative matrix may be performed by Isothermal ThermoGravimetric Analysis (I-TGA) at 60°C during 20 hours, as it will be more particularly illustrated in the examples, and
- A "reference composition" means a composition comprising the same amount by weight of plasticizer in the composition as the tested one, and for example a composition comprising the same amount by weight of triacetin as the amount of the tested plasticizer.

In the framework of the present invention, the plasticizing performance may be evaluated by the depletion of the glass transition temperature of the polymer, induced by the introduction of the plasticizer.

In the sense of the invention, a material of renewable origin, also known as a biomaterial or biobased molecule, or alternatively a biosourced material, is a material derived from starting materials of renewable origin, and for example from plants. A material may comprise a content of biocarbon and a content of fossil carbon. In the sense of the present invention, a material may be qualified as a biomaterial or a biobased molecule when it is extracted from vegetal biomass, which may be selected in a group comprising a plant or a part thereof (e.g. leave, stem, root).

### CELLULOSE DERIVATIVE

The cellulose derivative is generally an organic and particularly aliphatic ester of cellulose.

The cellulose derivative may also encompass ethylcellulose, hydroxyethylcellulose, methylcellulose, hydroxymethylcellulose, hydoxypropylcellulose and carboxymethylcellulose.

Advantageously, the cellulose ester has an acyl group having 2 to 4 carbon atoms as the ester group. It may be mixed esters of cellulose. There may be mentioned as an example of suitable cellulose ester in the context of the invention: cellulose acetate, cellulose propionate, cellulose butyrate, cellulose acetate propionate, cellulose acetate butyrate, cellulose acetate propionate butyrate, carboxymethyl cellulose acetate propionate and mixtures thereof. The butyryl group forming butyrate may be linear or branched.

According to a particular embodiment, cellulose ester may be selected among cellulose acetate, cellulose propionate and cellulose butyrate and even more particularly, the cellulose ester is cellulose acetate.

According to a particular embodiment of the invention, the cellulose derivative is obtained from cellulose from high quality wood pulp, or from cellulose from cotton linters. By "high quality wood pulp" is meant a wood pulp comprising at least 95% by weight of alpha cellulose. The amount of alpha cellulose is determined according to ISO standard 692.

When the cellulose ester is cellulose acetate, the molecular weight may range between 30000 to 150000, in particular between 50000 and 120000 and more particularly between 70000 and 100000.

Advantageously, the degree of substitution (DS) of the cellulose, or esterification degree, which is also expressed as acetyl value (combined acetic acid (%)), is between 2 and 3, preferably between 2.0 and 2.6, and most preferably between 2.3 and 2.5, for example is about 2.45. The degree of substitution of the cellulose is determined in accordance with ASTM D871-72.

### COMPOUND OF FORMULA (I)

The compound of formula (I) is defined as follows 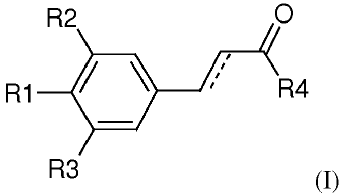 wherein
R1 represents a hydrogen atom or a hydroxyl group,
R2 and R3 independently represent a hydrogen atom, a (C₁-C₄)alkyl group or a -O(C₁-C₄)alkyl group,
R4 represents a hydrogen atom, an hydroxyl group, a (C₁-C₄)alkyl group, a benzyl group, a -O(C₁-C₄)alkyl group or a -Obenzyl group, and
---- represents a single bond or a double bond.

According to a particular embodiment, a compound of formula (I) is defined as having a R1 group which is as defined above; having R2 and R3 independently representing a hydrogen atom or a -O(C1-C4)alkyl group, preferentially a methoxy or ethoxy group, and having ---- being as defined above.

According to a further particular embodiment, a compound of formula (I) is defined as having R1, R2, R3 and R4 as defined above and havingrepresenting a single bond.

According to another particular embodiment, a compound of formula (I) is defined as having R1, R2, R3 and R4 as defined above and ---- represents a double bond, and more particularly in a trans configuration or configuration (E).

According to a particular embodiment, the compound of formula (I) is a biobased molecule.

According to another particular embodiment, the compound of formula (I) comes from a synthetic process where the starting matter occurs naturally in plants, trees, fruits or vegetables.

As a way of illustration of a compound of formula (I) that is a biobased molecule, cinnamic acid, corresponding to a compound of formula (I) wherein R1=R2=R3=H, represents a double bond and R4=OH may be mentioned. Said cinnamic acid occurs naturally in a number of plants. It may be obtained from oil of cinnamon, or from balsams such as storax.

Therefore, said cinnamic acid may be a source for the synthesis of further compounds of formula (I) according to methods well known from the man skilled in the art.

Coumaric acid, ferulic acid, sinapic acid and their corresponding derivatives, and more particularly their corresponding aldehydes may also be considered as potential sources for the synthesis of compounds of formula (I).

Cinnamic acid may for example be extracted from cinnamon; coumaric acid may for example be extracted from peanut, garlic, tomatoes, wine and vinegar; sinapic acid may for example be extracted from wine and vinegar and ferulic acid may for example be extracted from seeds of coffee, apple, peanut and orange.

The two following structures illustrate particular compounds of formula (I) according to the present invention: 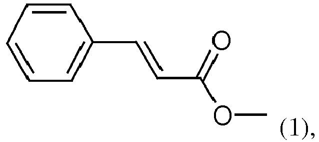 methyl-*trans*-cinnamate, also named "MTC" and 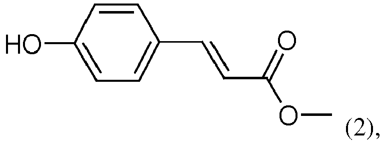 methyl-4-hydroxycinnamate, also named "M4HC".

MTC presents a molecular weight of 162 g/mol and M4HC presents a molecular weight of 179 g/mol.

### COMPOSITION

The present invention relates to a plasticized cellulose ester derivative composition comprising
(a) at least one cellulose ester derivative, which is present in an amount ranging from 60 and 95% by weight, in particular from 65 to 85% by weight, more particularly from 70 to 80% by weight, with respect to the total weight of the composition,
(b) at least one compound of formula (I) as defined in anyone of the preceding claims, which is present in an amount ranging from 5 and 40% by weight, in particular from 15 to 35% by weight, more particularly from 20 to 30% by weight, with respect to the total weight of the composition, and
(c) optionally at least one additional compound, which is present in an amount ranging from 0 to 15% by weight, in particular from 0.1 to 10% by weight, with respect to the total weight of the composition.

The composition according to the invention may further encompass at least one additional compound.

Among said additional compounds, anti-UV compounds, stabilizers, acid scavengers, lubricants, pigments, dyes, odor maskers, brighteners and mixtures thereof may be cited, as any other optional additives usually used to prepare cellulose derivatives and more particularly cellulose acetate, for example depending on the application.

The composition may also comprise an additional plasticizer or co-plasticizer being different from the plasticizer according to the present invention.

Among said additional plasticizer or co-plasticizer the following may be cited: triacetin, diethyl phthalate, dimethyl phthalate, butyl phthalyl butyl glycolate, diethyl citrate, dimethoxy ethyl phthalate, ethyl phthalyl ethyl glycolate, methyl phthalyl ethyl glycolate, sulfonamides n-ethyl-o, p-toluene, triphenyl phosphate, tricresyl phosphate, dibutoxy ethyl phthalate, diamyl phthalate, tributyl citrate, acetyl tributyl citrate, acetyl tripropyl citrate, tripropionin, tributyrin, o,p-toluene sulfonamide, pentaerythritol tetraacetate, dibutyl tartrate, diethylene glycol diacetate, diethylene glycol dipropionate, dibutyl adipate, dioctyl adipate, dibutyl azelate, trichloroethyl phosphate, tributyl phosphate, di-n-butyl sebacate, dibutyl phthalate, dioctyl phthalate, butylbenzyl phthalate, 2-ethylhexyl adipate, di-2-ethylhexyl phthalate and mixtures thereof.

When present, the additional compounds may be present in the composition in a content ranging from 0.05 to 15% by weight and preferably ranging from 0.1 to 10% by weight relative to the total weight of the composition.

It is a matter of routine operations for a person skilled in the art to adjust the nature and amount of the additional compounds present in the compositions in accordance with the invention such that the desired properties thereof are not thereby affected.

This is all the more true in connection to the optional presence of an additional plasticizer that should not alter the desired properties in connection to the presence of a plasticizer of formula (I), in particular with respect to the plasticizing power and the limited exudation.

### PROCESS ACCORDING TO THE INVENTION

A composition according to the present invention may be prepared according to the general knowledge of a person skilled in the art.

The plasticizer may be liquid or solid.

The preparation of the composition according to the present invention may merely consist in a direct implementation by a melt way of a mixture of the cellulose derivative with the plasticizer of formula (I) and optionally with at least one additional compound as defined above. It may more precisely consist in blending the melted cellulose derivative, the plasticizer and the at least one additional compound. The melting temperature may be preferably set between 160 and 220°C. Said mixture is generally carried out without solvent.

The process for the manufacture of a plasticized article also forms part of the invention. Therefore the present invention also concerns a process for the manufacture of a plasticized article comprising the steps of:
(a) having a composition according to the present invention, and
(b) forming the composition to produce the article.

The composition according to step (a) may comprise a compound of formula (I) extracted from a vegetable biomass.

Therefore, said process may be preceded by a step of extraction of a compound of formula (I) from a vegetable biomass.

Step (b) may be performed according to usual means known from the man skilled in the art, i.e. extrusion and injection molding.

### APPLICATIONS

Depending on the way it has been processed cellulose derivatives, and more particularly cellulose acetate, can be used for great varieties of applications (e.g. for films, membranes or fibers and also for 3D objects).

A plasticized article as a 3D object may be for example a cosmetic packaging, food packaging, hair accessories, wiring devices, electronic devices, home appliances, eye glass frames and tool handles.

The properties of the applied cellulose acetates are very important for these applications. Another special field for using cellulose acetate is the synthesis of porous, spherical particles, so called cellulose beads.

The applicative domain of the invention can be extended to domains for which the occurrence of this type of plasticizer can increase some specific properties such as optical performance retardation films.

Throughout the description, including the claims, the term "comprising a" should be understood as being synonymous with "comprising at least one", unless otherwise mentioned.

The terms "between... and..." and "ranging from... to..." should be understood as being inclusive of the limits, unless otherwise specified.

The examples below of compositions according to the invention are given as illustrations with no limiting nature.

### EXAMPLES

Comparative examples A and B are incorporated for comparative purpose with plasticized cellulose acetate composition comprising triacetin, considered as a reference plasticizer.

Various composition preparations are illustrated in example 1 to 4.

Results with respect to the plasticizing power and exudation in connection to compositions according to the invention in comparison to reference compositions of comparative example A and B are reported in example 5.

"DS" means Degree of Substitution.

### Comparative example A: preparation of a plasticized cellulose acetate composition comprising triacetin (80/20 (w/w) Composition)

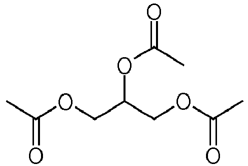

Triacetin (Mw=218 g/mol)
8 grams of Cellulose Acetate (DS=2.45) and 2 grams of triacetin have been mixed at 200°C through micro-extrusion then micro-injection, said trials being performed on a DSM micro-compounder, in order to obtain injection moulded sheets that can be further characterized. Said sheets present a size of 90 x 13 x 2 mm³. The polymer-plasticizer composition (80/20 w/w) is then characterized by:
- Differential Scanning Calorimetry (DSC) which permits to identify the decrease of the Glass Transition Temperature (Tg1) of the composition as compared to the Glass Transition Temperature (Tg0) of the polymer as such, and permits to measure the Plasticizing Power (Tg0 - Tg1) of the plasticizer used
- Isothermal ThermoGravimetric Analysis (I-TGA) (performed on a TG209 F1 Thermogravimetric Analyser commercialized by the NETZSCH Company) performed at 60°C during 20 hours which permits to measure the amount of plasticizer that can exudate from the polymer matrix over time.

### Comparative example B: preparation of a plasticized cellulose acetate composition comprising triacetin (70/30 (w/w) Composition)

7 grams of Cellulose Acetate (DS=2.45) and 3 grams of triacetin have been mixed at 190°C through micro-extrusion then micro-injection in order to obtain injection moulded sheets that can be further characterized. The polymer-plasticizer composition (70/30 w/w) is then characterized by:
- Differential Scanning Calorimetry (DSC) which permits to identify the decrease of the Glass Transition Temperature (Tg1) of the composition as compared to the Glass Transition Temperature (Tg0) of the polymer as such, and permits to measure the Plasticizing Power (Tg0 - Tg1) of the plasticizer used
- Isothermal ThermoGravimetric Analysis (I-TGA) performed at 60°C during 20 hours which permits to measure the amount of plasticizer that can exudate from the polymer matrix over time.

### Example 1: preparation of a plasticized cellulose acetate composition comprising Methyl-trans-Cinnamate (MTC) (80/20 (w/w) Composition)

8 grams of Cellulose Acetate (DS=2.45) and 2 grams of MTC have been mixed at 185°C through micro-extrusion then micro-injection in order to obtain injection moulded sheets that can be further characterized. The polymer-plasticizer composition (80/20 w/w) is then characterized by:
- Differential Scanning Calorimetry (DSC) which permits to identify the decrease of the Glass Transition Temperature (Tg1) of the composition as compared to the Glass Transition Temperature (Tg0) of the polymer as such, and permits to measure the Plasticizing Power (Tg0 - Tg1) of the plasticizer used
- Isothermal ThermoGravimetric Analysis (I-TGA) performed at 60°C during 20 hours which permits to measure the amount of plasticizer that can exudate from the polymer matrix over time.

### Example 2: preparation of a plasticized cellulose acetate composition comprising Methyl-trans-Cinnamate (MTC) (70/30 (w/w) Composition)

7 grams of Cellulose Acetate (DS=2.45) and 3 grams of MTC have been mixed at 175°C through micro-extrusion then micro-injection in order to obtain injection moulded sheets that can be further characterized. The polymer-plasticizer composition (70/30 w/w) is then characterized by:
- Differential Scanning Calorimetry (DSC) which permits to identify the decrease of the Glass Transition Temperature (Tg1) of the composition as compared to the Glass Transition Temperature (Tg0) of the polymer as such, and permits to measure the Plasticizing Power (Tg0 - Tg1) of the plasticizer used
- Isothermal ThermoGravimetric Analysis (I-TGA) performed at 60°C during 20 hours which permits to measure the amount of plasticizer that can exudate from the polymer matrix over time.

### Example 3: Preparation of a plasticized cellulose acetate composition comprising Methyl-4-HydroxyCinnamate (M4HC) (80/20 (w/w) Composition)

8 grams of Cellulose Acetate (DS=2.45) and 2 grams of M4HC have been mixed at 185°C through micro-extrusion then micro-injection in order to obtain injection moulded sheets that can be further characterized. The polymer-plasticizer composition (80/20 w/w) is then characterized by:
- Differential Scanning Calorimetry (DSC) which permits to identify the decrease of the Glass Transition Temperature (Tg1) of the composition as compared to the Glass Transition Temperature (Tg0) of the polymer as such, and permits to measure the Plasticizing Power (Tg0 - Tg1) of the plasticizer used
- Isothermal ThermoGravimetric Analysis (I-TGA) performed at 60°C during 20 hours which permits to measure the amount of plasticizer that can exudate from the polymer matrix over time.

### Example 4: Preparation of a plasticized cellulose acetate composition comprising Methyl-4-HydroxyCinnamate (M4HC) (70/30 (w/w) Composition)

7 grams of Cellulose Acetate (DS=2.45) and 3 grams of M4HC have been mixed at 175°C through micro-extrusion then micro-injection in order to obtain injection moulded sheets that can be further characterized. The polymer-plasticizer composition (70/30 w/w) is then characterized by:
- Differential Scanning Calorimetry (DSC) which permits to identify the decrease of the Glass Transition Temperature (Tg1) of the composition as compared to the Glass Transition Temperature (Tg0) of the polymer as such, and permits to measure the Plasticizing Power (Tg0 - Tg1) of the plasticizer used
- Isothermal ThermoGravimetric Analysis (I-TGA) performed at 60°C during 20 hours which permits to measure the amount of plasticizer that can exudate from the polymer matrix over time.

### Example 5: results with respect to plasticizing power and exudation associated with examples 1 to 4

The results from Example 1 to Example 4 are listed in the following Table:

| **Plasticizer** | **Tg1 (°C)** | **Plasticizing Power (°C) (*)** | **Exudation Amount (%w)** |
|---|---|---|---|
| Comparative example A with triacetin (80/20) | 109 | 84 | 2.60 |
| Methyl-*trans*-Cinnamate 80/20 | 109 | 84 | 2.35 |
| Methyl-4-HydroxyCinnamate 80/20 | 107 | 86 | 0.75 |
| | | | |
| Comparative exemple B with triacetin (70/30) | 78 | 115 | 4.00 |
| Methyl-*trans*-Cinnamate 70/30 | 90 | 103 | 2.30 |
| Methyl-4-HydroxyCinnamate 70/30 | 85 | 108 | 0.80 |

| | | | |
|---|---|---|---|
| (*) Plasticizing Power = Tg0 - Tg1, with Tg0 = 193°C (Glass Transition Temperature of Cellulose Acetate DS=2.45 as such) | | | |

The platicizing power values of the compositions of the present invention are comparable to the plasticizing power of the reference composition.

The exudation amount is under the one as obtained with the reference composition.

## Claims

1. A plasticized cellulose ester derivative composition comprising a cellulose cellulose ester derivative and at least a compound of formula (I) 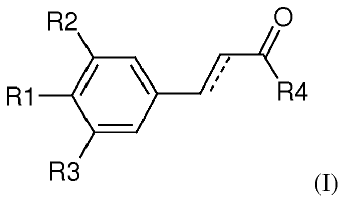 wherein
R1 represents a hydrogen atom or a hydroxyl group,
R2 and R3 independently represent a hydrogen atom, a (C₁-C₄)alkyl group or a -O(C₁-C₄)alkyl group,
R4 represents a hydrogen atom, an hydroxyl group, a (C₁-C₄)alkyl group, a benzyl group, a -O(C₁-C₄)alkyl group or a -Obenzyl group, and
represents a single bond or a double bond.

2. The composition according to claim 1, wherein
R1 is as defined in claim 1,
R2 and R3 independently represent a hydrogen atom or a -O(C₁-C₄)alkyl group, preferentially a methoxy or ethoxy group, and
---- is as defined in claim 1.

3. The composition according to claim 1 or 2, wherein
R1, R2, R3 and R4 are as defined in claim 1,
represents a single bond.

4. The composition according to claim 1 or 2, wherein
R1, R2, R3 and R4 are as defined in claim 1,
---- represents a double bond, and more particularly in configuration (E).

5. The composition according to anyone of the preceding claims, wherein the compound of formula (I) is a biobased molecule.

6. The composition according to anyone of the preceding claims, wherein compound (I) is chosen among

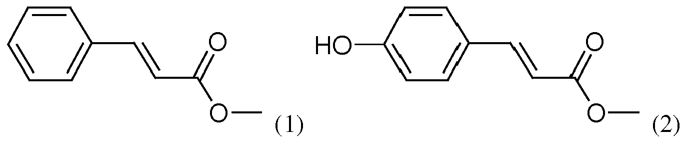

7. A plasticized cellulose ester derivative composition comprising
(a) at least one cellulose ester derivative, which is present in an amount ranging from 60 and 95% by weight, in particular from 65 to 85% by weight, more particularly from 70 to 80% by weight, with respect to the total weight of the composition,
(b) at least one compound of formula (I) as defined in anyone of the preceding claims, which is present in an amount ranging from 5 and 40% by weight, in particular from 15 to 35 % by weight, more particularly from 20 to 30% by weight, with respect to the total weight of the composition, and
(c) optionally at least one additional compound, which is present in an amount ranging from 0 to 15% by weight, in particular from 0.1 to 10% by weight, with respect to the total weight of the composition.

8. The composition according to the preceding claim, wherein the additional compound is selected from anti-UV compounds, stabilizers, acid scavengers, lubricants, pigments, dyes, odor maskers, brighteners, additional plasticizer or co-plasticizer and mixtures thereof.

9. The composition according to anyone of the preceding claims, wherein the cellulose ester derivative is selected from cellulose acetate, cellulose propionate, cellulose butyrate, cellulose acetate propionate, cellulose acetate butyrate, cellulose acetate propionate butyrate, carboxymethyl cellulose acetate propionate and mixtures thereof and more particularly is cellulose acetate.

10. Use of the compound of formula (**I**) as defined in anyone of claims 1 to 6 as plasticizer of a cellulose ester derivative, and more particularly of cellulose ester.

11. Process for the manufacture of a plasticized article comprising the steps of:
(a) having a composition according to anyone of claims 1 to 9, and
(b) forming the composition to produce the article, for example by means of extrusion and injection molding, optionally preceded by a step of extraction of a compound of formula (I) from a vegetable biomass.

12. Use of the composition according to anyone of claims 1 to 9 for producing a plasticized article, for example a plasticized article selected from a cosmetic packaging, food packaging, hair accessories, wiring devices, electronic devices, home appliances, eye glass frame and tool handle.
